Europäisches Patentamt

European Patent Office

Office européen des brevets

(19)

(11) **EP 0 406 074 B1**

(12) **FASCICULE DE BREVET EUROPEEN**

(45) Date de publication et mention
de la délivrance du brevet:
**21.08.1996 Bulletin 1996/34**

(51) Int Cl.⁶: **G06T 7/20**, G06T 9/40

(21) Numéro de dépôt: **90401774.6**

(22) Date de dépôt: **22.06.1990**

(54) **Procédé de segmentation du champ de mouvement d'une image pour le codage d'images vidéo**

Verfahren zur Teilung des Bewegungsfeldes eines Bildes zum Kodieren eines Videobildes

Image movement field segmentation process for video image coding

(84) Etats contractants désignés:
**AT BE CH DE DK ES FR GB GR IT LI LU NL SE**

(30) Priorité: **27.06.1989 FR 8908547**

(43) Date de publication de la demande:
**02.01.1991 Bulletin 1991/01**

(73) Titulaire: **THOMSON multimedia
92400 Courbevoie (FR)**

(72) Inventeur: **Kerdranvat, Michel
F-92045 Paris la Défense (FR)**

(74) Mandataire: **Ruellan-Lemonnier, Brigitte et al
THOMSON Multimedia,
9 Place des Vosges
La Défense 5
92050 Paris La Défense (FR)**

(56) Documents cités:
**FR-A- 2 551 290        FR-A- 2 628 864
US-A- 4 661 849**

## Description

L'invention se rapporte au domaine du codage-décodage d'images vidéo, notamment dans le but de transmettre des images haute définition via un canal de transmission qui autorise l'adjonction de données numériques d'assistance au décodage d'une capacité égale à 1 Mbit/s. L'invention a particulièrement pour objet un procédé de segmentation de champ de mouvement ponctuel d'images en vue de le coder dans la limite de 1 Mbit/s, et son application au codage d'images vidéo.

Les procédés les plus performants pour la transmission d'images vidéo numériques actuellement connus mettent en oeuvre des procédés de traitement avant l'émission qui permettent de réduire le débit transmis en ligne. Ainsi par exemple, au lieu de transmettre toutes les informations (chrominance, luminance) relatives à tous les pixels, le traitement permet de rechercher les différences entre images et notamment les déplacements d'éléments d'images ou de pixels et de ne transmettre que les informations d'actualisation de l'image que sont les vecteurs caractérisant le déplacement des zones ou des pixels d'une image à la suivante. Un procédé de traitement performant consiste à établir un vecteur de mouvement par point et à transmettre ce champ de mouvement.

Le débit de 1 Mbit/s est trop faible pour permettre la transmission d'un champ de mouvement ponctuel pour les images vidéo complètement ; en conséquence, il importe de bien choisir les informations relatives au champ de mouvement qui seront transmises de manière à obtenir la meilleure restitution possible des images, le codage des informations transmises étant établi à partir de l'image précédente et du champ de mouvement associé à l'image courante.

Une première disposition prise pour le traitement du champ de mouvement issu d'un estimateur de mouvement ponctuel est de transmettre seulement un vecteur mouvement par bloc de n.n pixels (n étant toujours une puissance de 2). Sur la base d'une grille haute définition de 1440 points par ligne et 1152 lignes, le débit résultant est de 1,3 Mblocs pour des blocs de 8.8.

Pour optimiser le codage tout en restant à un débit inférieur au débit imposé (1 Mbit/s), la méthode de codage dite "quad-tree" s'est avérée très intéressante. Cette méthode permet en effet d'avoir des blocs de tailles différentes et donc de réduire le débit de blocs. Pour cela le problème est de rendre le champ de mouvement ponctuel le plus uniforme possible dans des ensembles de blocs.

Il serait alors possible d'envisager de faire l'histogramme du champ de mouvement ponctuel dans son ensemble. D'emblée cette procédure est globale, ce qui donne un volume de données à traiter important. De plus, pour assigner ensuite une vecteur à chacun des blocs n.n, chaque vecteur reconnu comme dominant à partir de l'histogramme doit être comparé à tous les vecteurs mouvement d'un bloc n.n afin de choisir le meilleur vecteur pour le bloc. Ce procédé de segmentation est donc lourd et éventuellement long.

L'invention a pour objet un procédé de segmentation du champ de mouvement obtenu par un estimateur de mouvement permettant d'extraire, de manière optimale pour un traitement ultérieur par codage "quad-tree", les vecteurs "dominants" qui seront transmis après codage.

Pour cela le procédé de segmentation selon l'invention consiste tout d'abord à effectuer un traitement local sur le champ de mouvement pour assigner à chaque bloc n.n le "meilleur" vecteur de mouvement parmi l'ensemble des vecteurs de mouvement disponibles pour le bloc ; c'est alors seulement qu'un traitement global permet d'extraire un ensemble de vecteurs dominants du champ de vecteurs par blocs n.n qui comporte déjà un nombre réduit de vecteurs et qui peut être considéré comme le meilleur champ de mouvement par bloc que l'on puisse obtenir à partir d'un champ de mouvement ponctuel.

La phase de réassignation d'un vecteur par bloc n.n après l'extraction des vecteurs dominants se trouve ainsi facilitée.

De plus il serait même possible de considérer directement un champ de mouvement par bloc n.n pour mettre en oeuvre le procédé de segmentation suivant l'invention.

L'invention a également pour objet l'application de ce procédé de segmentation au codage "quad-tree" d'images vidéo.

Selon l'invention, un procédé de segmentation du champ de mouvement issu d'un estimateur de mouvement délivrant, sous forme de vecteurs à deux composantes dans le plan image, le déplacement de pixels d'une image par rapport à l'image précédente, est caractérisé en ce qu'il comporte :

- une phase préalable de partition de l'image en blocs de n.n pixels et d'assignation d'un vecteur de mouvement choisi pour chaque bloc parmi les vecteurs possibles selon un critère majoritaire ;
- une phase de constitution d'un histogramme des vecteurs mouvements par blocs à l'issue de laquelle un classement des vecteurs mouvements rencontrés est effectué selon leur nombre d'occurrences ;
- une phase de ré-assignation d'un vecteur mouvement pour chacun des blocs, ce vecteur étant choisi parmi un nombre limité N de vecteurs dominants sélectionnés à partir de l'histogramme, et étant le vecteur le plus proche du vecteur initial du bloc parmi ces vecteurs dominants ;
- une phase de filtrage des vecteurs des blocs isolés ayant des vecteurs mouvement non cohérents avec ceux des blocs de leur voisinage ;
- une phase de calcul du débit nécessaire pour le codage du champ de mouvement résultant filtré, et de vérification que ce débit est inférieur ou égal à un débit maximal possible, la phase de ré-assignation d'un vecteur mouvement pour chacun des blocs parmi un nombre inférieur de vecteurs dominants étant reprise lorsque le débit est supérieur au débit maximal possible.

L'invention sera mieux comprise à l'aide de la description qui suit en référence aux figures annexées.

- La figure 1 illustre le vecteur mouvement d'un pixel entre deux images successives ;
- La figure 2 représente une image haute définition et sa partition pour la mise en oeuvre du procédé de segmentation selon l'invention ;
- La figure 3 illustre la formation des tableaux de composantes des vecteurs mouvements pour un bloc élémentaire et le tableau histogramme qui en résulte pour l'affectation d'un vecteur par bloc ;
- La figure 4 illustre la phase de filtrage, après l'affectation d'un vecteur par bloc ;
- La figure 5 illustre la formation de l'histogramme des vecteurs du champ de mouvement par bloc, filtré pour un quart d'image ;
- La figure 6 illustre la phase d'extraction de vecteurs par classe de mouvement ;
- La figure 7 illustre le tableau des vecteurs dominants, après suppression des maxima secondaires ;
- La figure 8 illustre la phase de filtrage temporel prenant en compte les vecteurs dominants dans des portions correspondantes d'images successives ;
- Les figures 9 et 10 illustrent respectivement les zones à vecteur uniforme dans un macrobloc de 16x16 blocs élémentaires et l'arbre de codage correspondant ;
- La figure 11 est l'organigramme du procédé de segmentation de champ de mouvement ponctuel suivant l'invention.

Comme indiqué ci-dessus, le procédé de segmentation s'applique particulièrement au champ du mouvement ponctuel délivré par un estimateur de mouvement. On rappelle qu'un estimateur de mouvement ponctuel fournit pour chaque point d'une image vidéo en cours d'analyse un vecteur mouvement V caractérisant le déplacement du pixel correspondant entre l'image précédente et l'image courante. Ce vecteur a donc des composantes $V_x$ et $V_y$ dans des axes de coordonnées x,y du plan d'image.

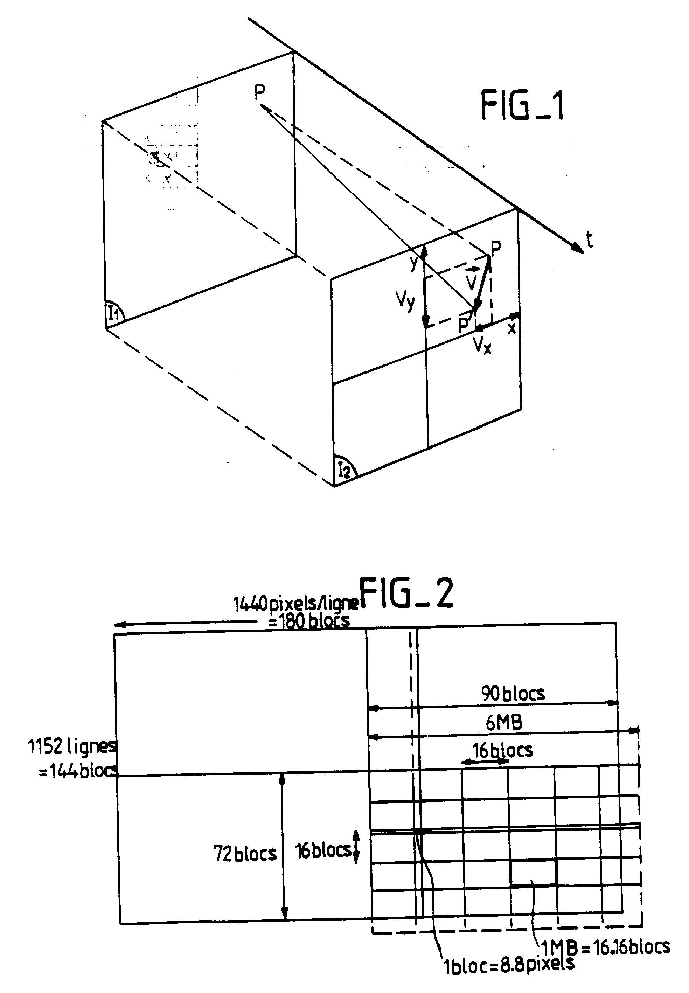

La figure 1 illustre le vecteur mouvement, et ses composantes dans le plan image, pour un point P d'une image $I_1$ devenu P' dans l'image, $I_2$ postérieure.

Le procédé de segmentation selon l'invention à partir d'un champ de mouvement ponctuel se déroule de la manière décrite ci-après.

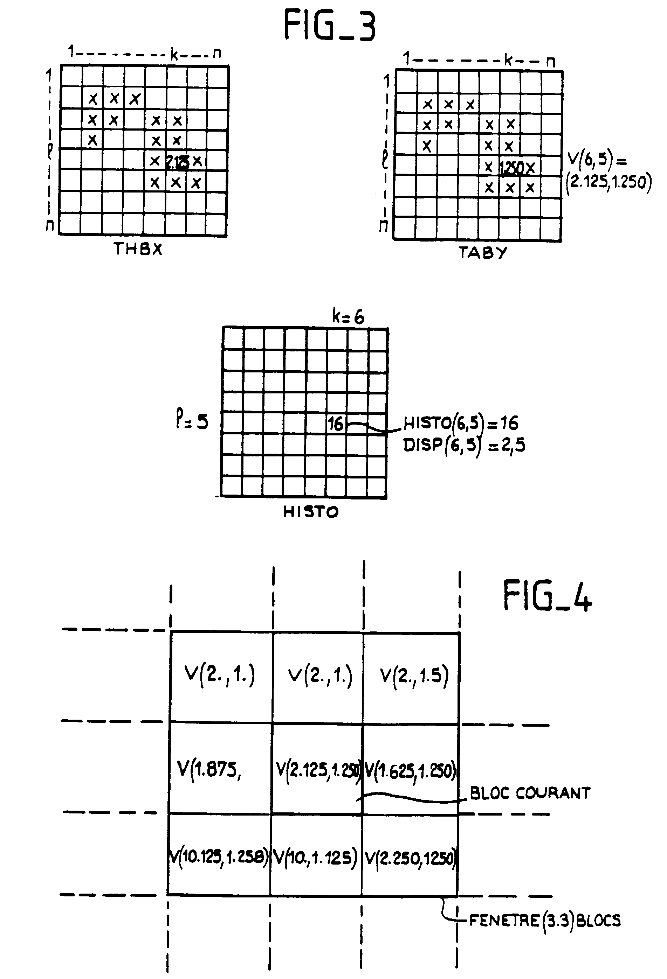

La première phase consiste à assigner un vecteur mouvement par bloc de n.n pixels. La figure 2 illustre une image haute définition de 1440 colonnes et 1152 lignes, pour laquelle on dispose d'un champ de mouvement constitué d'un vecteur par point, ou éventuellement d'un vecteur pour un point sur deux d'une ligne (les vecteurs calculés pour la ligne suivante correspondant alors à des points en quinconce avec ceux de la ligne précédente), suivant la méthode d'estimation de mouvement mise en oeuvre par l'estimateur. Cette première phase consiste à attribuer l'un des 64 (ou 32) vecteurs du bloc au bloc de n.n (8.8) points, ce vecteur étant choisi comme vecteur du bloc suivant un critère majoritaire. Pour cela les composantes $V_x$ et $V_y$ des vecteurs mouvement de chacun de blocs sont rangées dans des tableaux à la dimension du bloc, TABX pour les composantes en X et TABY pour les composantes en Y, tels que représentés sur la figure 3. Ainsi, dans le tableau TABX par exemple, la valeur TABX(k,l) dans la case correspondant à la $k^{ème}$ colonne et la $l^{ème}$ ligne est la composante $V_x$ du pixel de rang k à la ligne l du bloc. Pour un vecteur du bloc V(k,l) les opérations suivantes sont effectuées pour déterminer les écarts entre les composantes de ce vecteur et les composantes des autres vecteurs du bloc V(i,j), i et j décrivant l'ensemble [1,n] :

$$(1) \qquad FX = |TABX(k,l)-TABX(i,j)|$$

$$(2) \qquad FY = |TABY(k,l)-TABY(i,j)|$$

Ces deux tests correspondent à une comparaison du vecteur V(k,l) avec tous les vecteurs du bloc à la précision près.

Si FX et FY sont inférieurs ou égaux à un seuil S1, où S1 est égal à la précision des vecteurs (1/8 = 0,125 pixel), alors le nombre d'occurrences du vecteur V(k,l) est augmenté de 1. Le nombre d'occurrences de V(k,l) est noté HISTO(k,l) et chaque fois que le test est vérifié, HISTO(k,l) est actualisé :

$$(3) \qquad HISTO(k,l) = HISTO(k,l)+1$$

La dispersion des vecteurs assimilés à V(k,l) est également actualisée :

$$(4) \qquad DISP(k,l) = DISP(k,l)+FX+FY$$

Le choix d'un vecteur pour le bloc est fait à l'issue de ces comparaisons en prenant le vecteur qui a le nombre d'occurrences le plus élevé et, en cas d'égalité d'occurrences, celui qui a la dispersion la plus faible, à partir du tableau HISTO construit à partir des tableaux TABX et TABY du bloc. Dans les tableaux TABX et TABY les composantes $V_x = 2.125$ et $V_y = 1.250$ du vecteur V(6,5), ont été notées à titre d'exemple, c'est-à-dire le vecteur mouvement de 6e point de la 5e ligne du bloc courant de 8.8 en cours d'analyse.

A titre d'exemple également les cases des tableaux TABX et TABY contenant les composantes de vecteurs considérés comme semblables, (les différences FX et FY étant inférieures à $S_1 = 0.125$) ont été marquées d'une croix. Dans le tableau HISTO résultant, HISTO (5,6) qui est le nombre d'occurrences de ce vecteur est marqué égal à 16. La dispersion correspondante est marquée DISP(6,5) = 2.5.

La deuxième phase du procédé de segmentation du champ mouvement selon l'invention consiste à filtrer le champ de mouvement résultant de l'affectation d'un vecteur par bloc. ce champ est filtré en considérant une fenêtre 3.3 autour du vecteur courant traité comportant les vecteurs des blocs voisins : le vecteur central dans cette fenêtre est comparé à ses huit voisins et si ce vecteur est éloigné de tous ses voisins il est remplacé par l'un d'eux :

un vecteur $V(V_x,V_y)$ est considéré comme éloigné d'un vecteur $V'(V'_x,V'_y)$ si FX et FY, différences en valeurs absolues des composantes suivant X et Y de V et V' sont supérieures à un seuil prédéterminé $S_2$. $S_2$ peut être égal à O,5 par exemple. Quand un vecteur est ainsi éloigné de tous ses voisins, il est "filtré", c'est-à-dire remplacé par celui des huit blocs voisins qui apparaît avec le nombre d'occurrences le plus élevé parmi les vecteurs ponctuels du bloc à filtrer dans le tableau HISTO(k,l) correspondant, puis en cas d'égalité par celui qui a la dispersion la plus faible, le nombre d'occurrences et la dispersion ayant été calculés pour chacun des vecteurs du bloc à filtrer comme indiqué dans la phase précédente.

La figure 4 illustre cette phase de filtrage. Le vecteur retenu pour le bloc dont les tableaux ont été illustrés sur la figure 3 étant supposé être le vecteur V(6,5) = (2.125,1.1250), ce bloc étant supposé être celui en cours de traitement pour la phase de filtrage, ce bloc central est représenté entouré de ses 8 voisins formant ainsi la fenêtre de filtrage de (3.3) blocs. Dans l'exemple représenté, ce vecteur est conservé car il n'est pas éloigné de tous ses voisins (il est proche notamment des blocs de la ligne précédente et de ses voisins sur la même ligne.

La phase suivante consiste à former l'histogramme du champ de mouvement.

Le champ de mouvement ponctuel d'une image haute définition ayant été transformé en un champ de mouvement constitué d'un vecteur par bloc de n.n points, a une taille de 1440/n colonnes et 1152/n lignes, soit 180.144 pour des blocs 8.8.

Un histogramme est effectué par quart d'image haute définition, soit pour chaque tableau de vecteurs mouvement de taille (1440/2n, 1152/2n), soit 90.72 blocs dans l'exemple défini ci-dessus : les vecteurs du champ de mouvement ayant des composantes comprises entre les valeurs numériques -16 et +16, avec une précision de 1/8 = 0,125 pixel, dans un but de simplification une multiplication par 8 de chaque composante est effectuée, ce qui donne 255.255 vecteurs possibles ayant des composantes entières :

- $V_x$ appartient à l'ensemble [-15.875, +15.875] donc $8V_x$ appartient à l'ensemble [-127,+127]
- $V_y$ appartient à l'ensemble [-15.875,+15.875], donc $8V_y$ appartient à l'ensemble [-127, +127].

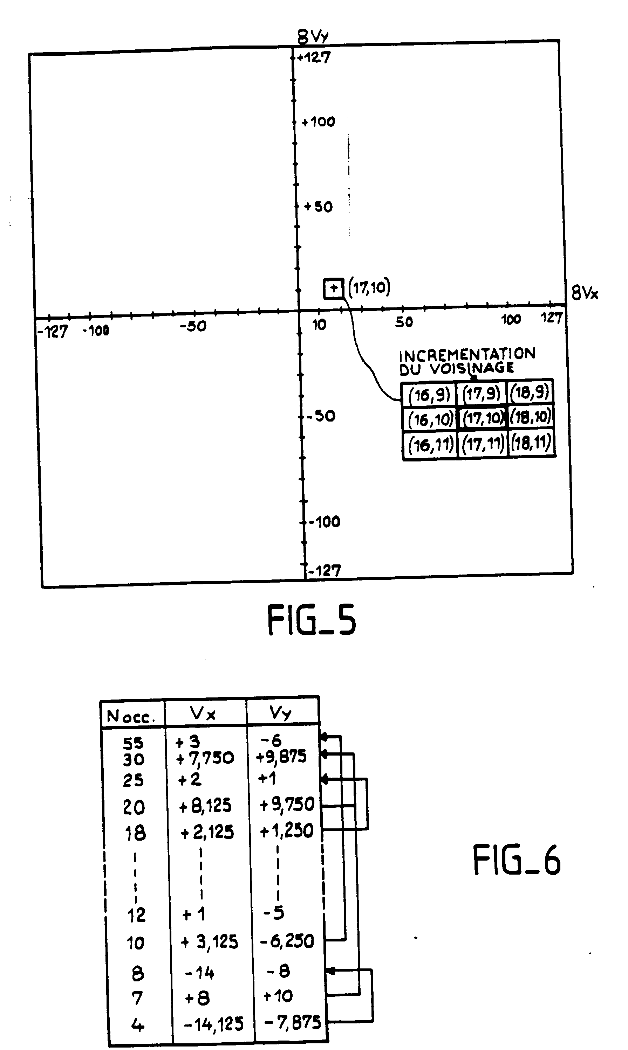

Pour réaliser l'histogramme du champ- de mouvement par blocs filtré, on utilise un tableau à deux dimensions qui comprend tous les déplacements possibles $8V_x$ et $8V_y$. La case centrale de ce tableau correspond au vecteur déplacement nul. Le tableau des vecteurs mouvement du quart d'image est analysé et, pour chaque vecteur déplacement des blocs du quart d'image considéré, on incrémente la case correspondante du tableau histogramme ainsi que, dans un mode préféré de réalisation, les 8 cases voisines de façon à réaliser dans cette phase un étalement de l'histogramme. La figure 5 illustre le tableau histogramme pour un quart d'image et donne le détail de l'actualisation lorsque le bloc courant représenté sur la figure 4, de vecteur V(2.125,1.250) soit 8V(17,10), est rencontré, et conduit à l'incrémentation des cases du voisinage tel qu'illustré. Sur le détail de la figure, les cases sont notées par leurs coordonnées. Leur contenu (non indiqué) est fonction des incrémentations successives. Après la réalisation de cet histogramme, pour un quart d'image (90.72 blocs), tous les vecteurs dont le nombre d'occurrences est supérieur à un seuil $S_3$, $S_3$ pouvant être fixé à 4, sont transférés dans un nouveau tableau tel que représenté sur la figure 6, avec leurs occurrences : chaque ligne du tableau comporte donc trois zones : le nombre d'occurrences du vecteur, sa composante suivant x, $V_x$ (ou $8V_x$), et sa composante suivant y, $V_y$ (ou $8V_y$). Puis un classement par valeurs décroissantes d'occurrences est effectué sur ce tableau.

La phase suivante est l'extraction d'un vecteur représentant chaque "classe" de mouvement, à partir du tableau obtenu à la fin de la phase précédente qui contient les composantes des vecteurs déplacement selon x, les composantes des vecteurs déplacement selon y, et les nombres d'occurrences. Pour cela, une comparaison est effectuée entre le vecteur qui a le nombre d'occurrences le plus élevé, premier du classement effectué c'est-à-dire à la ligne 1 dans le tableau, et tous les autres vecteurs du tableau, d'indices supérieurs à 1. Ceux qui sont considérés comme proches à un seuil $S_2$ près, $S_2$ étant le même seuil que lors de l'évaluation de la proximité dans le cadre du filtrage (soit $S_2 = 0,5$ par exemple) sont éliminés, et le contenue du tableau est décalé de manière à combler les vides.

Ensuite on examine le vecteur rangé en position 2 dans le tableau, suite au classement, par rapport aux vecteurs rangés à partir de la troisième position et ainsi de suite pour tous les vecteurs du tableau. Sur la figure 6, les vecteurs proches ont été reliées par des flèches : à la fin de cette phase, les vecteurs situés aux origines des flèches ont disparu du tableau. A l'issue de cette phase, chaque vecteur subsistant dans le tableau est le représentant d'une classe de vecteurs mouvement élargie.

La phase suivante est l'élimination des maxima secondaires.

Autour d'un vecteur ayant un nombre d'occurrences élevé, on peut trouver quelques vecteurs proches mais dont la proximité, évaluée par les différences de composantes, est supérieure au seuil $S_2$, et ayant un nombre d'occurrences plus faible. Ce phénomène correspond à l'étalement de l'histogramme autour des vecteurs dominants. Ces vecteurs peuvent être utilement regroupés avec le vecteur dont ils sont proches bien que la différence soit supérieure à 0,5 car il est inutile de conserver de tels vecteurs qui créent des maxima secondaires sur l'histogramme du champ de mouvement réduit par classe, obtenu dans la phase précédente.

Cependant lors de cette opération il est nécessaire de prendre en compte des mouvements globaux sur l'image, du type zoom ou rotation, qui ont pour effet de créer un histogramme quasiment plat car chaque point de l'image a un déplacement très proche de celui de ses voisins, mais tous les points d'image ont cependant des déplacements différents. En conséquence lorsque les maxima secondaires de l'histogramme sont recherchés, le premier vecteur examiné est celui de la première ligne du tableau c'est-à-dire celui qui a le nombre d'occurrences le plus grand, et la présence de maxima secondaires de ce vecteur n'est considérée que lorsqu'au moins deux vecteurs d'indice supérieur à 1 dans le tableau lui sont proches au seuil $S_5$ près.

Soit TRI(N,3) le tableau monodimensionnel à trois zones résultant du tri en classes, N étant le nombre de vecteurs qui reste à cette étape de l'algorithme. Si k est l'indice de la ligne du vecteur à examiner dans le tableau TRI, k varie de 1 à N. Si au moins deux vecteurs sur des lignes d'indices supérieurs à k, i et j, sont proches du vecteur à la ligne k, avec par conséquent un nombre d'occurrences inférieur au nombre d'occurences du vecteur à la ligne k, ces vecteurs sont alors considérés comme des maxima secondaires et éliminés. Le contenu du tableau TRI est alors décalé de manière à combler les vides, le nombres d'occurrence correspondant étant actualisé.

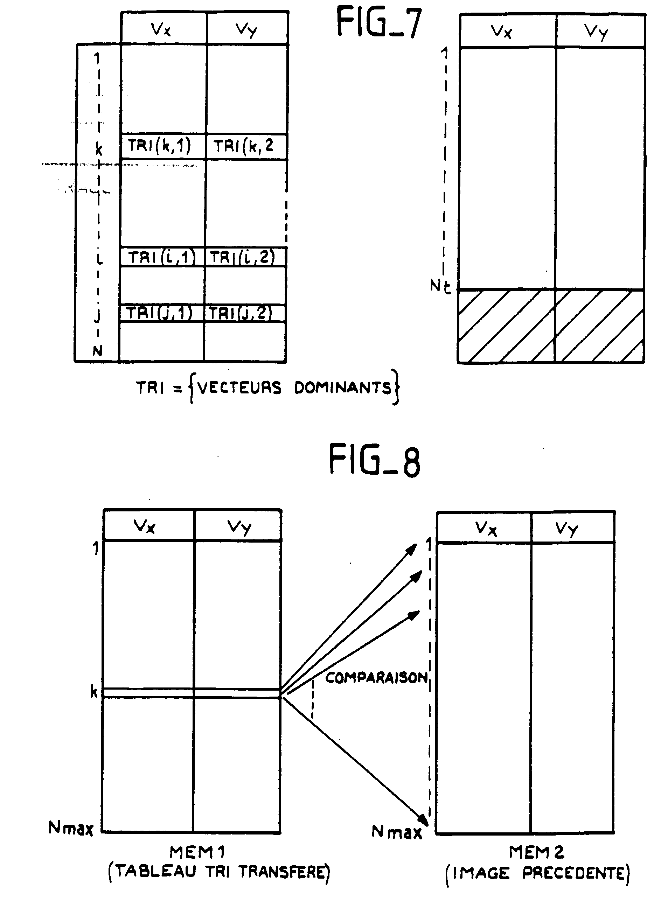

La notion de proximité est déterminée comme précédemment mais avec un seuil différent, $S_5$ ($S_5$ étant fixé à 2 par exemple). Dans le tableau TRI, représenté sur la figure 7 ; TRI(k,1) est la composante suivant X du vecteur rangé à la ligne k et TRI(k,2) est la composante suivant Y du même vecteur.

Soient i et j supérieurs à k :

si

$$|TRI(k,1) - TRI(i,1)| < S_5$$

$$|TRI(k,2) - TRI(i,2)| < S_5$$

et si

$$|TRI(k,1) - TRI(j,1)| < S_5$$

$$|TRI(k,2) - TRI(j,2)| < S_5$$

alors les vecteurs rangés aux lignes i et j sont des maxima secondaires et sont supprimés du tableau TRI.

Ces opérations commencent pour k = 1 puis k est incrémenté jusqu'à couvrir tous les vecteurs du tableau TRI.

A l'issue de cette phase les maxima secondaires, autour d'un maximum ayant un nombre d'occurrences plus élevé, sont éliminés.

La phase suivante est alors un filtrage temporel :

Ce filtrage temporel s'applique sur le tableau TRI qui contient à la fin de la phase précédente $N_t$ vecteurs. Le but des opérations précédentes était d'extraire les vecteurs dominants d'un quart d'image haute définition pour réduire le débit du champ de mouvement qui sera codé, à la suite du traitement, par une méthode de codage dite "quad-tree". Le nombre de vecteurs transmis est choisi en fonction du débit autorisé et noté Nmax par un quart d'image.

Les Nmax premiers vecteurs du tableau TRI sont transférés dans une mémoire tampon MEM1 et comparés à ceux qui ont été extraits comme vecteurs dominants pour l'image précédente et qui sont contenus dans une mémoire tampon MEM2 comme illustré par la figure 8. Si un vecteur du tableau TRI parmi les Nmax transférés dans la mémoire MEM1 est éloigné, au sens de la distance définie précédemment avec un seuil $S_1$, de tous les vecteurs de la mémoire MEM2, ce vecteur est éliminé de TRI ; le tableau TRI est ensuite décalé pour combler le vide et retrouver un vecteur supplémentaire si $N_t$ est supérieur à Nmax. Après avoir vérifié que les Nmax vecteurs du tableau TRI sont proches de ceux du tableau MEM2, ces vecteurs sont transmis au module suivant. Le contenu du tableau MEM1 est transféré dans le tableau MEM2 de manière à considérer le cas où un nouveau mouvement apparaît, par exemple lorsqu'un objet dans un fond commun aux deux images commence à se déplacer ; le contenu du tableau MEM2 n'est pas modifié par le résultat du filtrage temporel.

La phase suivante est la phase de réassignation d'un vecteur à chaque bloc de pixels de dimensions n. n dans l'image.

La phase de réassignation consiste, en utilisant les vecteurs sélectionnés par les phases précédentes, à rechercher pour chaque bloc n.n pixels d'images le vecteur le mieux susceptible de représenter ce bloc. En effet, à chaque bloc élémentaire de pixels n.n, on alloue un des Nmax vecteurs (éventuellement ces vecteurs peuvent être en nombre inférieur à Nmax) considéré comme dominant dans l'image. Pour cela, le champ de vecteurs résultant de la première phase (assignation d'un vecteur par bloc n.n) est repris, et l'on attribue à chaque bloc le vecteur dominant le plus proche du vecteur assigné initialement à ce bloc :

soit $V(V_x, V_y)$ le vecteur du bloc considéré, à l'issue de la première phase. La distance entre ce vecteur et chacun des vecteurs dominants du tableau TRI est calculée de la manière suivante :

$$D_1(k) = \text{Min } (D_x(k), D_y(k))$$

avec

$$D_x(k) = |V_x - TRI(k,1)|$$

$$D_y(k) = |V_y - TRI(k,2)|$$

Le vecteur assigné au bloc est le vecteur Vas(Vas$_x$, Vas$_y$) de rang k dans le tableau TRI qui donne la distance D$_1$(k) telle que définie ci-dessus minimum.

Cependant, si la distance minimum D1(k) est supérieure au seuil S$_5$, aucun vecteur n'est assigné à ce bloc.

Par ailleurs dans le cas où plusieurs indices k donnent le même minimum D1, les vecteurs mouvements correspondant à ces indices sont départagés en prenant celui qui donne une distance D2(k) telle que :

$$D2(k) = \min(D_x(k), D_y(k))$$

la plus faible.

A l'issue de cette phase il peut exister des blocs auxquels aucun vecteur dominant n'a pu être assigné.

La phase suivante est le traitement des blocs non assignés. Comme indiqué ci-dessus, à l'issue de la phase de réassignation d'un vecteur à chaque bloc n.n,., il peut se trouver qu'aucun des vecteurs dominants du tableau TRI ne convienne. Ces blocs peuvent être des blocs à mouvement initial erroné du fait d'un mauvais fonctionnement de l'estimateur de mouvement, ou des blocs à mouvement local particulier par exemple correspondant à des objets en mouvement de très petite taille.

Pour ces blocs, l'assignation d'un vecteur est réalisée en fonction du codage "quad-tree". C'est ainsi que si les trois blocs voisins du bloc considéré au sens du découpage "quad-tree" ont le même vecteur, ce vecteur est alloué au bloc non assigné. Si les vecteurs des trois blocs voisins au sens du codage "quad-tree" ne sont pas identiques, on attribue au bloc non assigné le vecteur majoritaire dans le voisinage des huit blocs les plus proches.

La phase suivante est le filtrage des blocs isolés.

Le champ du mouvement réassigné obtenu à la fin de la phase de traitement des blocs non assignés est filtré de manière à éliminer les blocs à vecteurs isolés, car ces blocs ont un coût élevé en débit de codage. Un bloc est dit à vecteur isolé s'il est entouré de 8 blocs ayant le même vecteur, le vecteur du bloc central étant ainsi différent de tous ses voisins. Dans ce cas le vecteur des blocs voisins est alloué au bloc central.

La phase suivante effectuée à l'issue de ce filtrage est le calcul du débit de codage.

En effet, avant transmission il est nécessaire de vérifier que le coût de codage des vecteurs mouvement résultants du procédé de segmentation ainsi effectué est compatible avec le débit de codage maximum autorisé. Les informations relatives au champ de mouvement sont codées comme indiqué ci-dessus, par un procédé de codage dit "quad-tree", c'est-à-dire selon un arbre de codage construit par partition de macroblocs de pixels selon 4 quadrants, puis de chaque quadrant résultant en 4 etc... jusqu'à ce que les blocs résultant de la partition soient homogènes en ce qui concerne le champ de vecteurs mouvement. Un tel procédé est décrit par exemple dans un article intitulé "Optimal Quadrature Construction Algorithm" par C.A. SHAFFER and H. SAMET dans "Computer Vision Graphics, and Image Processing" vol. 37, 402-419 (1987).

Le débit après codage est calculé en considérant des "macroblocs", de 128.128 pixels par exemple. Si n.n est la taille du bloc élémentaire, n est toujours une puissance de 2, il y a log$_2$(128/n) niveaux de profondeur dans l'arbre de codage de chaque macrobloc en plus du niveau initial correspondant au macrobloc lui-même. Si "niveau 0" est le niveau initial, le premier niveau c'est-à-dire celui de blocs 64x64 est atteint si le macrobloc n'est pas uniforme. Le deuxième niveau est atteint pour un bloc 64x64 s'il n'est pas uniforme et le processus continue ainsi jusqu'au bloc élémentaire de dimension n.n.

Le débit D, pour un quart d'image haute définition, est obtenu par la formule suivante :

$$D = No \times b \times MB \times c \, (bit/s)$$

où :

- "No" est le nombre de noeuds de tous les arbres de codage,
- "b" est le nombre de bits nécessaire à la description de chaque état possible pour un noeud ;
- "MB" est le nombre de macroblocs pour un quart d'image ;
- "c" est le nombre de champs par seconde.

L'état d'un noeud est soit un des vecteurs dominants représentatif du champ de mouvement de l'image, soit une indication de passage au niveau inférieur de l'arbre qui indique une partition du bloc en quatre.

En supposant que le nombre de vecteurs extraits par l'algorithme de segmentation précédent soit Nt, que le nombre de vecteurs effectivement transmis après filtrage temporel soit Ntrans, et que le nombre maximum de vecteurs transmis soit Nmax (Ntrans est toujours égal ou inférieur à Nmax), le nombre de bits nécessaire à la description de l'état d'un noeud est l'entier supérieur ou égal à log$_2$(Ntrans+1).

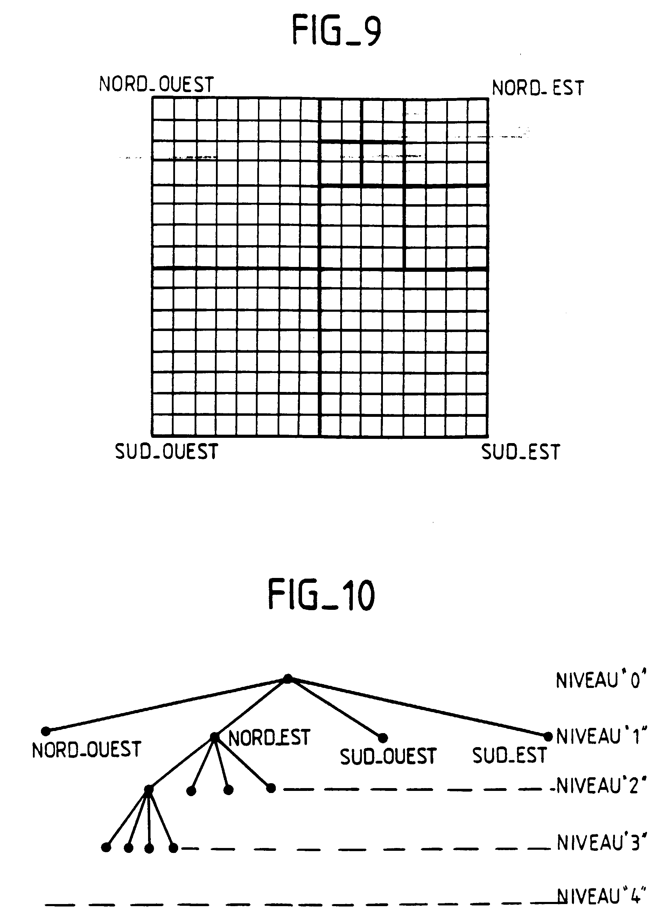

Les figures 9 et 10 illustrent la partition et le codage, pour un macrobloc de 16x16 blocs élémentaires avec quatre niveaux 0, 1, 2 et 3. La figure 9 illustre la segmentation du champ de mouvement du macrobloc correspondant à l'arbre de codage représenté à la figure 10 : le quart nord-ouest du macrobloc est uniforme, comme les quarts sud-ouest et sud-est qui sont donc codés chacun par un vecteur différent au niveau 1 ; le quart nord-est comprend trois quarts uniformes chacun codé par un vecteur au niveau 2, et un quart non uniforme codé lui-même après partition en quatre, au niveau 3 ;es blocs au niveau 3 étant uniformes. L'arbre de codage représenté sur la figure 10 comporte 13 noeuds ; si Nmax = 7 et Ntrans = Nmax, le nombre de bits nécessaire à la description de l'état d'un noeud est E[log$_2$8[,

(E(X) est la représentation de l'opération qui consiste à prendre l'entier supérieur ou égal à X) soit 3 ; il n'est pas nécessaire de descendre au dernier niveau. Le coût de l'arbre du macrobloc tel qu'il est représenté à la figure est égal à $13 \times E(\log_2(Nmax+1))$. Si Nmax égal 7 c'est-à-dire s'il existe 7 vecteurs dominants recensés pour ce quart d'image, le coût de l'arbre est $13 \times 3 = 39$ bits.

Les macroblocs dont le nombre est nécessairement entier recouvrent une zone plus grande que le quart d'image haute définition sur lequel la segmentation est effectuée. En effet un quart d'image HD comporte 90x72 blocs élémentaires de 8.8 pixels, soit un peu moins de 6 macroblocs en horizontal et un peu moins de 5 blocs en vertical. Les portions de macroblocs qui débordent du quart d'image haute définition sont remplis par le vecteur qui donne le coût minimal pour l'arbre de codage.

L'algorithme de segmentation est exécuté sur chaque quart d'image séparément ; le débit calculé par la formule précédente ne correspond donc qu'à une fraction du débit total.

La dernière phase est une phase de régulation du débit.

Dans la mesure où le débit calculé à l'issue de la phase précédente est supérieur à la limite autorisée, le procédé de segmentation est repris au début de la phase de réassignation d'un vecteur à chaque bloc n.n, et avant de reprendre cette phase le nombre Nmax est diminué de un. Les quatre dernières phases sont alors reprises et ainsi de suite jusqu'à ce que le débit total calculé soit inférieur ou égal au débit maximum autorisé.

Il a été indiqué dans la description qui précède que le procédé de segmentation utilisant un champ de mouvement "ponctuel", c'est-à-dire comportant un vecteur mouvement pour chacun des pixels ou éventuellement un vecteur mouvement pour un pixel sur feux de chaque ligne, disposés en quinconce sur des lignes successives.

Le procédé selon l'invention s'applique également à la segmentation de champ de mouvement par bloc si l'estimateur de mouvement utilisé en amont fournit un vecteur mouvement par bloc.. Bien entendu dans ce cas, la phase d'assignation d'un vecteur par bloc n.n est supprimée si l'estimateur fournit un vecteur mouvement par bloc n.n ou modifiée si l'estimateur fournit un vecteur mouvement pour un bloc de taille plus petite que n.n.

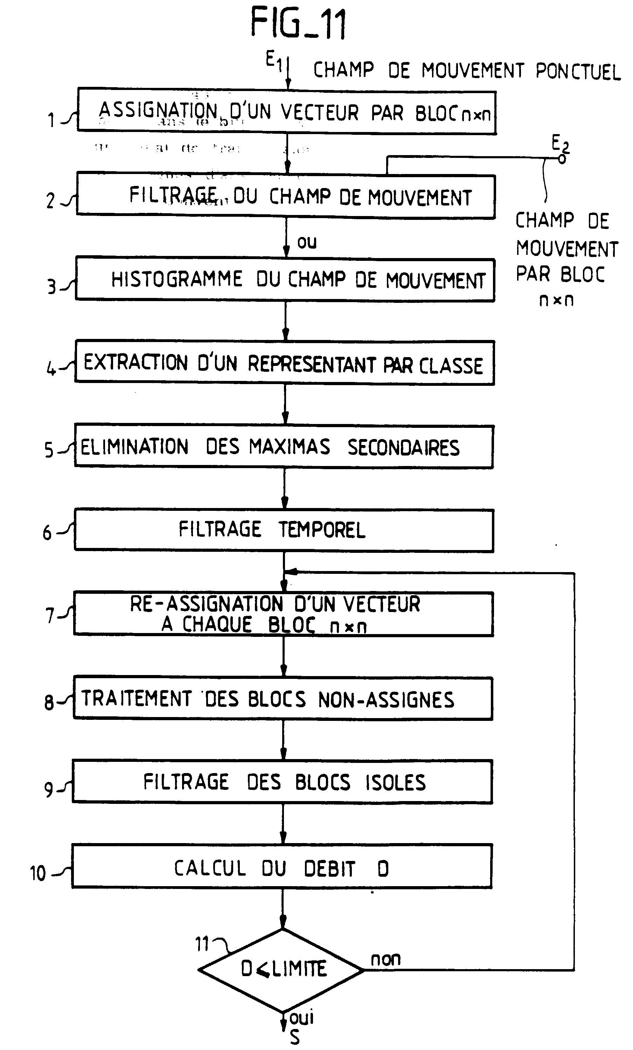

La figure 11 illustre la succession des différentes phases du procédé de segmentation de champ de mouvement ponctuel telles qu'elles ont été décrites précisément ci-dessus, à savoir :

- l'assignation d'un vecteur par bloc n.n à partir d'un champ de vecteurs de mouvement ponctuels appliqué à l'entrée $E_1$ ;
- le filtrage du champ de mouvement par blocs résultant de la première phase (ou éventuellement directement disponible si l'on dispose d'un champ de vecteur de mouvement par blocs de n.n pixels alors appliqué à l'entrée $E_2$) ;

- la formation de l'histogramme du champ de mouvement filtré pour un quart d'image ;
- l'extraction d'un vecteur représentant par classe de mouvement ;
- l'élimination des maxima secondaires ;
- le filtrage temporel ;
- la réassignation d'un vecteur à chaque bloc n.n ;
- le traitement des blocs auxquels aucun vecteur n'a pu être assigné ;
- le filtrage des blocs isolés ;
- le calcul du débit de codage, et la vérification que ce débit est inférieur à une valeur limite, à défaut de quoi une nouvelle étape de réassignation est effectuée comme indiqué ci-dessus, si le débit est convenable le codage du champ de vecteurs de mouvement segmenté ainsi obtenu en sortie S peut alors être effectué en vue de la transmission.

L'invention n'est pas limitée au procédé tel que décrit en détails ci-dessus. En particulier, un certain nombre de choix ont été faits à chacune des étapes du procédé de segmentation et un certain nombre de calculs sont effectués à chaque étape. Les précisions données à titre d'exemple quant aux dimensions des blocs et quant aux valeurs de seuil ne sont pas limitatives. En ce qui concerne les valeurs de seuil il est cependant nécessaire que $S_2$ soit supérieur à $S_1$ et que $S_5$ soit supérieur à $S_2$.

De plus, le traitement par quart-d'image, particulièrement adapté au codage quad-tree prévu ensuite, n'est pas un élément essentiel de l'invention. Dans la mesure où les capacités de calcul seraient suffisantes pour le traitement de l'image en une seule fois, il serait possible de réaliser le même traitement sur l'ensemble de l'image, ou également d'effectuer le traitement sur des portions d'images qui ne sont pas 1/4.

La phase de filtrage du champ de mouvement par bloc n.n (2e phase du procédé de segmentation) facilite le traitement ultérieur mais n'est pas essentielle, notamment du fait qu'une phase de filtrage des blocs isolés est prévue ensuite et que dans son ensemble, le procédé de segmentation selon l'invention tend à ne pas tenir compte des vecteurs de mouvement isolés. Le filtrage du champ de mouvement et/ou le filtrage des blocs isolés, mentionnés dans les 2e et 9e phases du procédé de segmentation pourraient donc être modifiées ou même supprimées suivant le type d'analyse de séquences effectué.

Dans l'étape de formation de l'histogramme, qui permet ensuite de former le tableau des vecteurs de mouvement les plus souvent rencontrés, il a été indiqué ci-dessus que l'on incrémentait non seulement la case correspondant au vecteur retenu pour le bloc courant après filtrage, mais également les huit vecteurs de son voisinage. Cette caractéristique prévue pour étaler l'histogramme pourrait se révéler non nécessaire dans certains cas, par exemple si l'image est traitée en une seule fois. La multiplication par 8 des composantes $V_x$ et $V_y$

est également une commodité, non indispensable.

D'autre modifcations pourraient être prévues sans sortir du cadre de l'invention. Par exemple dans certains cas il pourrait être suffisant de sélectionner les N vecteurs du tableau histogramme ayant les nombres d'occurences les plus élevés sans mettre en oeuvre la phase dite d'extraction d'un vecteur représentant par "classe de mouvement" et d'utiliser directement ces vecteurs comme vecteurs dominants pour ré-assigner un vecteur à chaque bloc avant codage.

**Revendications**

1. Procédé de segmentation du champ de mouvement issu d'un estimateur de mouvement délivrant, sous forme de vecteurs (V) à deux composantes ($V_x$, $V_y$) dans le plan image, le déplacement de pixels d'une image par rapport à l'image précédente, caractérisé en ce qu'il comporte :

   - une phase préalable (1, fig.11) de partition de l'image en blocs de n.n (8.8) pixels et d'assignation d'un vecteur de mouvement choisi pour chaque bloc parmi les vecteurs possibles selon un critère majoritaire ;
   - une phase (3) de constitution d'un histogramme des vecteurs mouvements par blocs à l'issue de laquelle un classement des vecteurs mouvements rencontrés est effectué selon leur nombre d'occurrences ;
   - une phase (7) de ré-assignation d'un vecteur mouvement pour chacun des blocs, ce vecteur étant choisi parmi un nombre limité N de vecteurs dominants sélectionnés à partir de l'histogramme, et étant le vecteur le plus proche du vecteur initial du bloc parmi ces vecteurs dominants ;
   - une phase (9) de filtrage des vecteurs des blocs isolés ayant des vecteurs mouvement non cohérents avec ceux des blocs de leur voisinage ;
   - une phase de calcul du débit nécessaire (10) pour le codage du champ de mouvement résultant filtré, et de vérification (11) que ce débit est inférieur ou égal à un débit maximal possible, la phase (7) de ré-assignation d'un vecteur mouvement pour chacun des blocs parmi un nombre inférieur de vecteurs dominants étant reprise lorsque le débit est supérieur au débit maximal possible.

2. Procédé selon la revendication 1, caractérisé en ce que, pour le traitement d'un champ de mouvement ponctuel, la phase préalable consiste à rechercher pour chaque bloc de n.n pixels le vecteur mouvement dont le nombre d'occurrences est le plus grand dans le bloc, et en cas d'égalité celui qui a la dispersion (DISP(k,l)) la plus faible.

3. Procédé selon la revendication 1, caractérisé en ce que pour le traitement d'un champ de mouvement par bloc, la phase préalable (1) consiste à transmettre ($E_2$) le champ de mouvement si le bloc a une dimension n.n et à transmettre ($E_1$) un vecteur assigné au bloc n.n si le champ de mouvement est établi sur des blocs de dimension inférieure.

4. Procédé selon l'une des revendications 1 à 3, caractérisé en ce qu'une phase (2) de filtrage du champ de mouvement par bloc est effectuée avant la phase (3) de formation de l'histogramme, ce filtrage consistant à remplacer le vecteur mouvement du bloc courant par celui de l'un de ses 8 voisins lorsque ledit vecteur du bloc courant est estimé éloigné de ceux de tous ses 8 voisins.

5. Procédé selon l'une des revendications 1 à 4, caractérisé en ce que la formation de l'histogramme du champ de vecteurs mouvement par blocs (3) est effectuée à partir d'un tableau (fig. 5) à deux dimensions ($8V_x$, $8V_y$) dont la case centrale correspond à un déplacement nul, et dont les autres cases correspondent à tous les déplacements possibles, les cases d'une même ligne, respectivement colonne, du tableau correspondant à une composante de déplacement en abscisse respectivement en ordonnée, dans l'image courante, un tableau histogramme (fig.6) étant formé en augmentant de 1 le contenu de la case correspondant au déplacement du bloc courant analysé ainsi que les 8 cases voisines dudit tableau à deux dimension (fig.5).

6. Procédé selon la revendication 5, caractérisé en ce que, pour la phase de ré-assignation (7), les vecteurs dominants sont les N vecteurs ayant les nombres d'occurrence les plus grands dans le tableau histogramme.

7. Procédé selon la revendication 5, caractérisé en ce que la phase de ré-assignation (7) est précédée d'une phase (4) d'extraction d'un vecteur représentant par classe de mouvement consistant à classer les vecteurs par ordre décroissant des contenus des cases correspondantes du tableau histogramme, puis à éliminer les vecteurs proches d'un vecteur de rang supérieur pour former une suite, à un seuil $S_2$ près, de vecteurs représentant des classes de mouvement élargies.

8. Procédé selon la revendication 7 caractérisé en ce que, parmi les vecteurs représentant des classes de mouvement élargies, ceux qui correspondent à des maxima secondaires définis par couples de deux vecteurs différents proches d'un vecteur de rang supérieur, la proximité étant retenue par comparaison à un seuil $S_5$ supérieur à $S_2$, sont également éliminés (5), l'ensemble des vecteurs subsistant après cette élimination des vecteurs proches étant l'ensemble vecteurs dominants utilisé pour le codage du champ de mouvement par bloc.

9. Procédé selon la revendication 8, caractérisé en ce que avant la phase de ré-assignation (7) un filtrage temporel (6) de l'ensemble des vecteurs dominants est effectué, par comparaison de chaque vecteur avec tous les vecteurs de l'ensemble des vecteurs dominants établi pour l'image précédente et élimination des vecteurs qui sont estimés éloignés de tous les vecteurs de l'ensemble associé à l'image précédente.

10. Procédé selon la revendication 1, caractérisé en ce que la phase de ré-assignation (7) consiste à rechercher dans l'ensemble des vecteurs dominants le vecteur le plus proche du vecteur initial du bloc par calcul d'une distance entre le vecteur initial et chacun des vecteurs dominants et sélection du vecteur dominant conduisant à la distance minimum $(D_1(k))$.

11. Procédé selon la revendication 10, caractérisé en ce que le vecteur dominant conduisant à la distance minimum n'est ré-assigné au bloc que si cette distance est inférieure à un seuil ($S_5$), les blocs auxquels aucun vecteur n'a pu être assigné étant affecté (8) lors du codage d'un vecteur mouvement fonction des vecteurs des blocs voisins.

12. Procédé de segmentation du champ de mouvement d'images vidéo selon l'une des revendications précédentes caractérisé en ce que dans la phase de calcul du débit (10) le codage est effectué selon un procédé du type "quad-tree".

**Patentansprüche**

1. Verfahren zur Teilung des Bewegungsfeldes, das von einer Bewegungs-Schätzfunktion erzeugt wird, welche die Verschiebung von Bildpunkten eines Bildes gegenüber dem vorangehenden Bild in Form von Vektoren (V) mit zwei Komponenten ($V_x$, $V_y$) in der Bildebene liefert, dadurch gekennzeichnet, daß es folgendes umfaßt:

- eine vorbereitende Phase (1, Fig. 11) der Zerlegung des Bildes in Blöcke von n.n (8.8) Bildpunkten und der Zuweisung eines Bewegungsvektors, der für jeden Block nach einem Majoritätskriterium aus den möglichen Vektoren ausgewählt wird;
- eine Phase (3) der Anfertigung eines Histogramms der Bewegungsvektoren pro Block, nach deren Abschluß eine Klassifizierung der aufgetretenen Bewegungsvektoren nach der Häufigkeit ihres Auftretens vorgenommen wird;
- eine Phase (7) der erneuten Zuweisung eines Bewegungsvektors zu jedem der Blöcke, wobei dieser Vektor aus einer begrenzten Anzahl N von dominierenden Vektoren gewählt wird, die ausgehend vom Histogramm ausgewählt werden, und derjenige Vektor unter diesen dominierenden Vektoren ist, der dem ursprünglichen Vektor des Blockes am nächsten kommt;
- eine Phase (9) der Filterung der Vektoren der isolierten Blöcke, die Bewegungsvektoren aufweisen, die mit denen der Blöcke ihrer Umgebung nicht kohärent sind;
- eine Phase der Berechnung der erforderlichen Übertragungsgeschwindigkeit (10) für das Kodieren des gefilterten resultierenden Bewegungsfeldes und der Überprüfung (11), ob diese Übertragungsgeschwindigkeit kleiner als eine oder gleich einer maximal mögliche(n) Übertragungsgeschwindigkeit ist, wobei die Phase (7) der erneuten Zuweisung eines aus einer kleineren Anzahl dominierender Vektoren ausgewählten Bewegungsvektors zu jedem der Blöcke wiederholt wird, wenn die Übertragungsgeschwindigkeit größer ist als die maximal mögliche Übertragungsgeschwindigkeit.

2. Verfahren nach Anspruch 1, dadurch gekennzeichnet, daß für die Verarbeitung eines punktweisen Bewegungsfeldes die vorbereitende Phase darin besteht, für jeden Block von n.n Bildpunkten denjenigen Bewegungsvektor zu bestimmen, dessen Häufigkeit des Auftretens in dem Block am größten ist, und im Falle einer Gleichheit denjenigen, der die kleinste Streuung (DISP(k,1)) hat.

3. Verfahren nach Anspruch 1, dadurch gekennzeichnet, daß für die Verarbeitung eines blockweisen Bewegungsfeldes die vorbereitende Phase (1) darin besteht, das Bewegungsfeld zu übertragen ($E_2$), falls der Block einen Umfang n.n hat, und einen dem Block n.n zugewiesenen Vektor zu übertragen ($E_1$), falls das Bewegungsfeld für Blöcke von geringerer Größe aufgestellt wird.

4. Verfahren nach einem der Ansprüche 1 bis 3, dadurch gekennzeichnet, daß vor der Phase (3) der Herstellung des Histogramms eine Phase (2) der Filterung des blockweisen Bewegungsfeldes durchgeführt wird, wobei diese Filterung darin besteht, den Bewegungsvektor des aktuellen Blockes durch den eines seiner 8 Nachbarn zu ersetzen, wenn gefunden wird, daß der besagte Vektor des aktuellen Blockes von denen aller seiner 8 Nachbarn entfernt ist.

5. Verfahren nach einem der Ansprüche 1 bis 4, dadurch gekennzeichnet, daß die Herstellung des Histogramms des blockweisen Bewegungsvektorfeldes (3) ausgehend von einer Tabelle (Fig. 5) mit zwei Dimensionen ($8V_x$, $8V_y$) durchgeführt wird, deren mittleres Feld einer Verschiebung null entspricht und deren andere Felder allen möglichen Verschiebungen entsprechen, wobei die Felder ein und derselben Zeile bzw. Spalte der Tabelle einer Komponente einer Verschiebung in Richtung der Abszissen- bzw. Ordinatenachse im aktuellen Bild entsprechen, wobei eine Histogramm-Tabelle (Fig. 6) hergestellt wird, indem der Inhalt des der Verschiebung des analysierten aktuellen Blockes entsprechenden Tabellenfeldes sowie die 8 benachbarten Felder der besagten zweidimensionalen Tabelle (Fig. 5) um 1 erhöht werden.

6. Verfahren nach Anspruch 5, dadurch gekennzeichnet, daß für die Phase der erneuten Zuweisung (7) die dominierenden Vektoren die N Vektoren sind, welche in der Histogramm-Tabelle die größten Häufigkeiten des Auftretens haben.

7. Verfahren nach Anspruch 5, dadurch gekennzeichnet, daß der Phase der erneuten Zuweisung (7) eine Phase (4) der Bestimmung eines repräsentativen Vektors für jede Bewegungsklasse vorausgeht, die darin besteht, die Vektoren nach abnehmender Größe der Inhalte der entsprechenden Felder der Histogramm-Tabelle zu ordnen und dann die einem Vektor von höherem Rang nahen Vektoren zu eliminieren, um eine Folge von sich bis auf einen einer Schwelle $S_2$ entsprechenden Abstand nahekommenden Vektoren zu bilden, die erweiterte Bewegungsklassen repräsentieren.

8. Verfahren nach Anspruch 7, dadurch gekennzeichnet, daß unter den Vektoren, die erweiterte Bewegungsklassen repräsentieren, diejenigen, die sekundären Maxima entsprechen, die durch Paare von zwei verschiedenen, einem Vektor von höherem Rang nahen Vektoren definiert sind, wobei die Nähe durch Vergleich mit einer Schwelle $S_5$ festgestellt wird, die größer als $S_2$ ist, ebenfalls eliminiert werden (5), wobei die Menge der nach dieser Eliminierung der nahen Vektoren verbleibenden Vektoren die Menge der dominierenden Vektoren ist, die für die Kodierung des blockweisen Bewegungsfeldes verwendet wird.

9. Verfahren nach Anspruch 8, dadurch gekennzeichnet, daß vor der Phase der erneuten Zuweisung (7) eine zeitliche Filterung (6) der Menge der dominierenden Vektoren durch Vergleich jedes Vektors mit allen Vektoren der Menge der dominierenden Vektoren, die für das vorangehende Bild bestimmt wurde, und Eliminierung derjenigen Vektoren, die als von allen Vektoren der mit dem vorangehenden Bild verknüpften Menge entfernt angesehen werden, durchgeführt wird.

10. Verfahren nach Anspruch 1, dadurch gekennzeichnet, daß die Phase der erneuten Zuweisung (7) darin besteht, in der Menge der dominierenden Vektoren den Vektor zu ermitteln, der dem ursprünglichen Vektor des Blockes am nächsten ist, und zwar durch Berechnung eines Abstandes zwischen dem ursprünglichen Vektor und jedem der dominierenden Vektoren und Auswahl desjenigen dominierenden Vektors, der den minimalen Abstand ($D_1(k)$) liefert.

11. Verfahren nach Anspruch 10, dadurch gekennzeichnet, daß der dominierende Vektor, der den minimalen Abstand liefert, nur dann dem Block erneut zugewiesen wird, wenn dieser Abstand kleiner als eine Schwelle ($S_5$) ist, wobei den Blöcken, denen kein Vektor zugewiesen werden konnte, bei der Kodierung ein von den Vektoren der Nachbarblöcke abhängiger Bewegungsvektor zugewiesen wird (8).

12. Verfahren zur Teilung des Bewegungsfeldes von Videobildern nach einem der vorhergehenden Ansprüche, dadurch gekennzeichnet, daß in der Phase der Berechnung der Übertragungsgeschwindigkeit (10) die Kodierung nach einem Verfahren vom Typ "quad-tree" vorgenommen wird.

## Claims

1. Method of segmenting the field of motion arising from an estimator of motion delivering, in the form of vectors (V) with two components (Vx, Vy) in the image plane, the displacement of pixels of an image relative to the preceding image, characterised in that it comprises:

   - a preliminary phase (1, Fig. 11) of partitioning the image into blocks of n.n (8.8) pixels and of assigning of a vector of motion chosen for each block from the possible vectors according to a majority criterion;
   - a phase (3) of setting-up of a histogram of the blockwise motion vectors at the termination of which a classing of the motion vectors encountered is carried out according to their number of occurrences;
   - a phase (7) of reassigning of a motion vector for each of the blocks, this vector being chosen from a limited number N of dominant vectors selected from the histogram, and being the vector, from these dominant vectors, closest to the initial vector of the block;
   - a phase (9) of filtering the vectors of the isolated blocks having motion vectors incoherent with those of the blocks of their neighbourhood;

- a phase of calculating the flow rate necessary (10) for the encoding of the resulting, filtered field of motion, and of verifying (11) that this flow rate is less than or equal to a maximum possible flow rate, the phase (7) of reassigning of a motion vector for each of the blocks from a lower number of dominant vectors being taken up again when the flow rate is greater than the maximum possible flow rate.

2. Method according to Claim 1, characterised in that, for the processing of a pointwise field of motion, the preliminary phase consists in seeking, for each block of n.n pixels, the motion vector whose number of occurrences is greatest in the block, and in the event of equality, the one which has the lowest dispersion (DISP (k, 1).

3. Method according to Claim 1, characterised in that, for the block-processing of a field of motion, the preliminary phase (1) consists in transmitting ($E_2$) the field of motion if the block has a dimension n.n and in transmitting ($E_1$) a vector assigned to the n.n block if the field of motion is established on blocks of lower dimension.

4. Method according to one of Claims 1 to 3, characterised in that a phase (2) of block-filtering of the field of motion is carried out before the phase (3) of forming the histogram, this filtering consisting in replacing the motion vector of the current block by that of one of its 8 neighbours when the said vector of the current block is estimated distant from those of all its 8 neighbours.

5. Method according to one of Claims 1 to 4, characterised in that the forming of the histogram of the blockwise field of motion vectors (3) is carried out from a two-dimensional (8Vx, 8Vy) table (Fig. 5), the central location of which corresponds to a zero displacement, and the other locations of which correspond to all the possible displacements, the locations of a same line, respectively column, of the table corresponding to an abscissa, respectively ordinate, component of displacement in the current image, a histogram table (Fig. 6) being formed by increasing by 1 the content of the location corresponding to the displacement of the current analysed block as well as the 8 neighbouring locations of the said two-dimensional table (Fig. 5).

6. Method according to Claim 5, characterised in that, for the reassigning phase (7), the dominant vectors are the N vectors having the largest numbers of occurrence in the histogram table.

7. Method according to Claim 5, characterised in that the reassigning phase (7) is preceded by a phase (4) for extracting one representative vector per class of motion consisting in classing the vectors by decreasing order of the contents of the corresponding locations of the histogram table, then in eliminating the vectors close to a vector of higher rank, to form a sequence, to within a threshold $S_2$, of vectors representing widened classes of motion.

8. Method according to Claim 7, characterised in that, among the vectors representing widened classes of motion, those which correspond to secondary maxima defined by pairs of two different vectors close to a vector of higher rank, proximity being accepted by comparison with a threshold $S_5$ greater than $S_2$, are likewise eliminated (5), the set of vectors remaining after this elimination of the close vectors being the dominant vector set used for the encoding of the block field of motion.

9. Method according to Claim 8, characterised in that, before the reassigning phase (7) a time filtering (6) of the set of dominant vectors is carried out, by comparing each vector with all the vectors of the set of dominant vectors which was established for the preceding image and eliminating vectors which are estimated distant from all the vectors of the set associated with the preceding image.

10. Method according to Claim 1, characterised in that the reassigning phase (7) consists in seeking, in the set of dominant vectors, the vector closest to the initial vector of the block by calculating a distance between the initial vector and each of the dominant vectors and selecting the dominant vector leading to the minimum distance ($D_1(K)$).

11. Method according to Claim 10, characterised in that the dominant vector leading to the minimum distance is reassigned to the block only if this distance is less than a threshold ($S_5$), the blocks to which no vector has been able to be assigned being allocated (8) during the encoding of a motion vector dependent on the vectors of the neighbouring blocks.

12. Method of segmenting the field of motion of video images according to one of the preceding claims characterised in that in the flow rate calculation phrase (10), coding is carried out according to a method of "quad-tree" type.

FIG_1

FIG_2

1440 pixels/ligne
= 180 blocs

90 blocs

6MB

16 blocs

1152 lignes
= 144 blocs

72 blocs

16 blocs

1 MB = 16.16 blocs

1 bloc = 8.8 pixels

## FIG_3

THBX

V(6,5) =
(2.125,1.250)

TABY

HISTO(6,5) = 16
DISP(6,5) = 2,5

HISTO

## FIG_4

| V(2.,1.) | V(2.,1.) | V(2.,1.5) |
|---|---|---|
| V(1.875, | V(2.125,1.250) | V(1.625,1.250) |
| V(10.125,1.250) | V(10.,1.125) | V(2.250,1250) |

BLOC COURANT

FENETRE (3.3) BLOCS

FIG_5

| N occ. | Vx | Vy |
|---|---|---|
| 55 | + 3 | − 6 |
| 30 | + 7,750 | +9,875 |
| 25 | + 2 | +1 |
| 20 | + 8,125 | +9,750 |
| 18 | + 2,125 | +1,250 |
| ¦ | ¦ | ¦ |
| 12 | + 1 | − 5 |
| 10 | + 3,125 | − 6,250 |
| 8 | − 14 | − 8 |
| 7 | + 8 | + 10 |
| 4 | − 14,125 | − 7,875 |

FIG_6

14

# FIG_7

| | $V_x$ | $V_y$ |
|---|---|---|
| 1 | | |
| k | TRI(k,1) | TRI(k,2) |
| l | TRI(l,1) | TRI(l,2) |
| j | TRI(j,1) | TRI(j,2) |
| N | | |

| | $V_x$ | $V_y$ |
|---|---|---|
| 1 | | |
| Nt | | |

TRI = {VECTEURS DOMINANTS}

# FIG_8

| | $V_x$ | $V_y$ |
|---|---|---|
| 1 | | |
| k | | |
| Nmax | | |

MEM 1
(TABLEAU TRI TRANSFERE)

COMPARAISON

| | $V_x$ | $V_y$ |
|---|---|---|
| 1 | | |
| Nmax | | |

MEM 2
(IMAGE PRECEDENTE)

# FIG_9

NORD_OUEST

NORD_EST

SUD_OUEST

SUD_EST

# FIG_10

NIVEAU "0"

NORD_OUEST

NORD_EST

SUD_OUEST

SUD_EST

NIVEAU "1"

NIVEAU "2"

NIVEAU "3"

NIVEAU "4"

# FIG_11

E1 ↓ CHAMP DE MOUVEMENT PONCTUEL

1 — ASSIGNATION D'UN VECTEUR PAR BLOC n×n

E2

2 — FILTRAGE DU CHAMP DE MOUVEMENT

CHAMP DE MOUVEMENT PAR BLOC n×n

ou

3 — HISTOGRAMME DU CHAMP DE MOUVEMENT

4 — EXTRACTION D'UN REPRESENTANT PAR CLASSE

5 — ELIMINATION DES MAXIMAS SECONDAIRES

6 — FILTRAGE TEMPOREL

7 — RE-ASSIGNATION D'UN VECTEUR A CHAQUE BLOC n×n

8 — TRAITEMENT DES BLOCS NON-ASSIGNES

9 — FILTRAGE DES BLOCS ISOLES

10 — CALCUL DU DEBIT D

11 — D ≤ LIMITE

non

oui
S